(19)

Europäisches
Patentamt
European
Patent Office
Office européen
des brevets

(11) **EP 4 472 126 A1**

(12) **EUROPEAN PATENT APPLICATION**

(43) Date of publication:
**04.12.2024   Bulletin 2024/49**

(51) International Patent Classification (IPC):
**H04L 9/00** *(2022.01)*      **G06N 10/00** *(2022.01)*
**H04L 9/08** *(2006.01)*      **H04L 9/32** *(2006.01)*

(21) Application number: **23175874.9**

(22) Date of filing: **27.05.2023**

(52) Cooperative Patent Classification (CPC):
**H04L 9/0852; G06N 3/006; H04L 9/3239;**
**H04L 9/50;** G06N 10/60

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **BTQ AG**
**9490 Vaduz (LI)**

(72) Inventors:
• **FU, Boxiang**
**9490 Vaduz (LI)**

• **ROHDE, Peter**
**9490 Vaduz (LI)**
• **SINGH, Deepesh**
**Brisbane QLD 4072 (AU)**
• **MURALEEDHARAN, Gopikrishnan**
**9490 Vaduz (LI)**
• **BRENNEN, Gavin**
**9490 Vaduz (LI)**

(74) Representative: **Finnegan Europe LLP**
**1 London Bridge**
**London SE1 9BG (GB)**

(54) **IMPROVED BLOCKCHAIN SYSTEM AND METHOD**

(57)    The present disclosure relates to a quantum-analogue proof-of-work consensus method for use in a blockchain network. The method comprises: receiving a plurality of verification data obtained using a boson sampling experiment associated with a candidate block, from a plurality of different miners of the blockchain network. Each verification data may be associated with a different miner, and wherein each miner performs the boson sampling experiment using at least some information comprised in the candidate block. The method may comprise analysing the received plurality of verification data to determine if a consensus has been achieved; and adding the candidate block to a blockchain associated to the blockchain network when consensus is achieved.

FIG. 2

EP 4 472 126 A1

## Description

### BACKGROUND

Blockchain technology is based on the ability of participants of a peer-to-peer network to reach a consensus to validate and verify a new set of block-bundled transactions (i.e. a new block for addition to the existing blockchain) in an environment without a centralised authority. A consensus algorithm is a process by which all peers in the blockchain network reach a common agreement on the current state of the distributed ledger. One of the best-tested consensus algorithms that has demonstrated robustness and security is Proof-of-Work (POW). POW comprises selecting a miner to create blocks based on being the earliest to solve a one-way function, which is traditionally an inverse hashing problem. The structure of the one-way way function is chosen so that its parameters depend on the current block information, making pre-computation infeasible, and the problem is also progress-free, i.e. the probability of successfully mining a block grows linearly with the time, or equivalent work, spent solving the problem (inverse hashing).

However, there are two issues that threaten the continued scalable use of POW consensus algorithms. Firstly, problems such as inverse hashing used in POW consensus admit solutions by special purpose processors such as Application-Specific Integrated Circuits (ASICs), which are very energy intensive. It is necessary to maintain a constant average block mining time to avoid inflationary pressure on asset-based blockchains such as Bitcoin with mining rewards, and to maintain the integrity of the protocol in the presence of network latency and growth. This means that as the computational speed of ASICs increases, the difficulty of the one-way function must be increased, and consequently, the energy costs of mining increase. Secondly, POW as traditionally formulated assumes only classical computers are available as mining resources. Quantum computers, through amplitude amplification, can achieve a quadratic speedup in the solution to unstructured problems like inverse hashing, and this means they no longer satisfy the progress-free condition, since the probability to solve the problem grows non-linearly with computational time spent. An adversarial network of future quantum computers performing traditional POW consensus will have radically different dynamics to the classical counterpart. A future-proof consensus algorithm must mitigate for quantum processing.

### SUMMARY OF DISCLOSURE

The quantum analogue proof-of-work consensus scheme disclosed herein provides an alternative to the current consensus algorithms used in blockchain networks. Embodiments of the methods and systems disclosed herein address the threat that quantum universal computers pose to security of current proof-of-work consensus algorithms and provide a more cost and energy-efficient implementation than extant supercomputers currently used to execute consensus algorithms.

In accordance with an aspect of the disclosure there is provided a quantum-analogue proof-of-work consensus method for use in a blockchain network. The method may comprise: receiving a plurality of verification data obtained using a boson sampling experiment associated with a candidate block, from a plurality of different miners of the blockchain network. Each verification data may be associated with a different miner, and wherein each miner performs the boson sampling experiment using at least some information comprised in the candidate block. The method may comprise analysing the received plurality of verification data to determine if a consensus has been achieved; and adding the candidate block to a blockchain associated to the blockchain network when consensus is achieved.

In accordance with another aspect of the disclosure there is provided a quantum-analogue proof-of-work consensus method for use in a blockchain network. The method may comprise: receiving a candidate block comprising a plurality of transaction data; generating verification data by performing a boson sampling experiment using information comprised in the candidate block; and sending the verification data to a verification server comprised in the blockchain network, the verification data enabling the verification server to determine if consensus is achieved.

In accordance with some embodiments, the information defining an initial input state of the boson sampling experiment may be obtained from the candidate block. Similarly, information defining an optical configuration of an optical network for conducting the boson sampling experiment may also be obtained from the candidate block. In accordance with some embodiments, information comprised in the candidate block, may be mapped to different parameters of the boson sampling experiment. The mapping may be predefined between the miners of the blockchain network. In this way information comprised in the candidate block may be used to conduct the boson sampling experiment.

### BRIEF DESCRIPTION OF THE DRAWINGS

Exemplary, non-limiting embodiments of the disclosure will be described with reference to the appended figures, in which:

FIG. 1 is a schematic illustration of a networked computer system configured to implement a blockchain comprising a quantum proof-of-work consensus scheme with the herein-disclosed embodiments;

FIG. 2 is a detailed schematic illustration of blockchain miner of the networked computer system of FIG. 1;

FIG. 3A is a flowchart illustrating a method carried out to implement a quantum analogue proof-of-work consensus scheme, in accordance with the herein disclosed embodiments;

FIG. 3B is a flowchart illustrating a method carried out to analyse a plurality of received verification data in accordance with the herein-disclosed embodiments;

FIG. 3C is a flowchart illustrating a method carried out to authenticate a plurality of received verification data in accordance with the herein-disclosed embodiments;

FIG. 3D is a flowchart illustrating a method carried out to validate a plurality of authenticated verification data in accordance with the herein-disclosed embodiments;

FIG. 3E is a flowchart illustrating a method carried out to determine whether verification data generated by the miners satisfies a threshold condition in accordance with the herein disclosed embodiments;

FIG. 4 is a table illustrating an example of a plurality of verification data with the herein-disclosed embodiments;

FIG. 5 illustrates exemplary mode-binned distributions and a true-mode binned distribution performed using the verification data illustrated in FIG. 4;

FIG. 6 illustrates exemplary state-binned distributions and a true-state binned distribution performed using the verification data of FIG. 4;

FIG. 7A is an exemplary schematic illustration of a hardware implementation of a miner of FIG. 1;

FIG. 7B is another exemplary schematic illustration of a hardware implementation of a miner of FIG. 1;

FIG. 7C is yet another exemplary schematic illustration of a hardware implementation of a miner of FIG. 1; and

FIG. 8 is a graph illustrating the energy performances of a quantum boson-sampler, a supercomputer, and a single-core computer.

## DETAILED DESCRIPTION OF EMBODIMENTS

The following detailed description includes references to the accompanying drawings. Wherever possible, the same reference numbers are used in the drawings and the description to refer to the same or similar components and/or processes. While several illustrative embodiments are described herein, modifications, adaptations and other implementations are possible. For example, substitutions, additions, or modifications may be made to the components illustrated in the drawings, and the illustrative methods described herein may be modified by substituting, reordering, removing, or adding steps to the disclosed methods. Accordingly, the following detailed description is not limited to the disclosed embodiments and examples. Instead, the proper scope is defined by the appended claims.

## I. System Overview

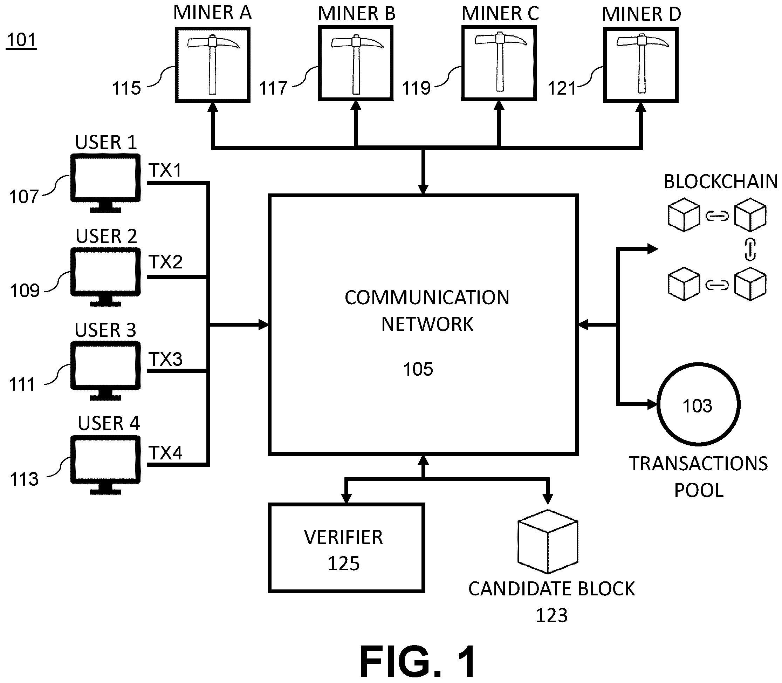

FIG. 1 is a schematic illustration of a networked computer system 101 configured to implement a blockchain comprising a quantum proof-of-work (PoW) consensus scheme, in accordance with embodiments of the present disclosure. For example, such a blockchain may serve as a digital ledger for electronic transactions (TXs), although it is to be appreciated that any type of data may be stored on the blockchain, and reference to a digital ledger for electronic transactions is for non-limiting illustrative purposes only. The type of data stored on the blockchain is immaterial for present purposes.

Electronic transaction data generated by different users is collected and stored in a transaction pool repository 103, via shared communication network 105. For example, first transaction data TX1 associated with a first user at first user terminal 107, second transaction data TX2 associated with a second user at second user terminal 109, third transaction data TX3 associated with a third user at third user terminal 111, and fourth transaction data TX4 associated with a fourth user at fourth user terminal 113, are sent to the transaction pool 103 via shared communication network 105. Transaction data received by transaction pool 103 is stored for subsequent processing by at least one of a plurality of blockchain miners 115, 117, 119, 121.

Once a predetermined threshold condition is satisfied, then at least one blockchain miner 115, 117, 119, 121 receives the plurality of transaction data (TX1.... TX4) stored in transaction pool 103 for processing. For example, the predetermined threshold condition may relate to a predetermined number of electronic transactions stored in transaction pool 103. The received transaction data is bulk processed by at least one blockchain miner 115, 117, 119, 121. Alternatively, at least one blockchain miner 115, 117, 119, 121 obtains the plurality of transaction data, once the threshold condition has been satisfied. The obtained, or received transaction data, as the case may be, is processed by at least one blockchain miner to generate a new candidate block 123 to be added to an existing blockchain, and/or to generate a new candidate block 123 of a new blockchain. The new candidate block 123 is subsequently distributed to the plurality of blockchain miners 115, 117, 119, 121 via communication network 105, such that the quantum consensus proof-of-work scheme may be carried out by each participating miner 115, 117, 119, 121.

By way of background, the process of generating a block and adding it to a blockchain is commonly referred to as "mining". The mining process comprises several different steps, including: generating a candidate block, verifying the candidate block, and adding the candidate block to the blockchain. The process of verifying the candidate block may itself comprise several different steps, including, for example, implementing a consensus scheme. Accordingly, once candidate block 123 is generated, it is verified by verifier 125, to ensure that the candidate block has been correctly generated, before it is added to an existing blockchain or used to start a new blockchain, as the case may be. For example, the verification process may comprise the plurality of blockchain miners 115, 117, 119, 121 sending verification data associated with candidate block 123 to verifier 125 for verification, via communication network 105. Verifier 125 analyses the verification data received from each of the plurality of blockchain miners 115, 117, 119, 121, and sends a reward to each miner whose verification data satisfies a threshold condition, as determined from analysis of the associated verification data. After being verified the candidate block is added to the blockchain.

Although represented as separate entities for illustrative purposes in FIG. 1 any miner may also double as a verifier. Conversely, any verifier may also double as a miner.

## II. The Blockchain Miner

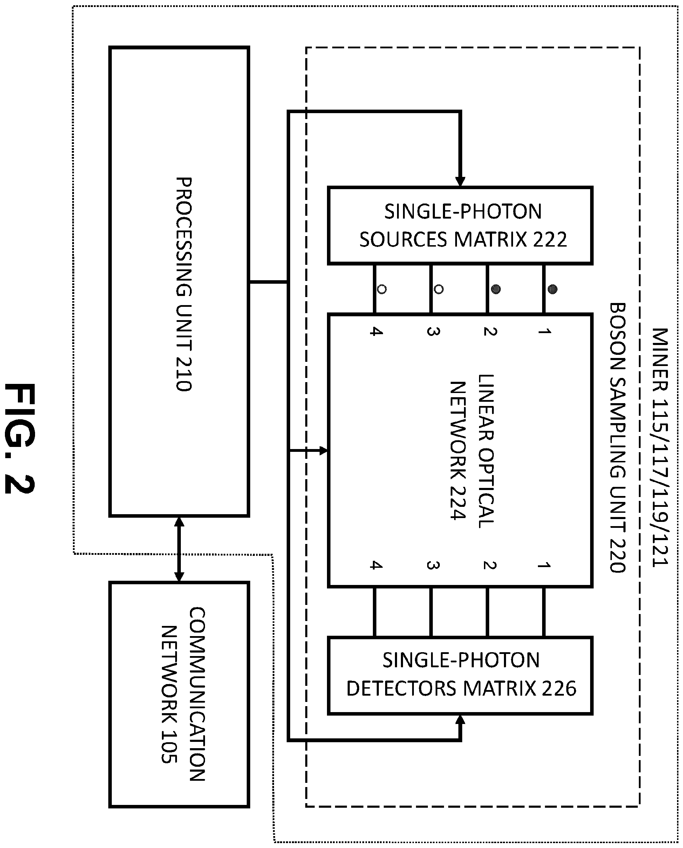

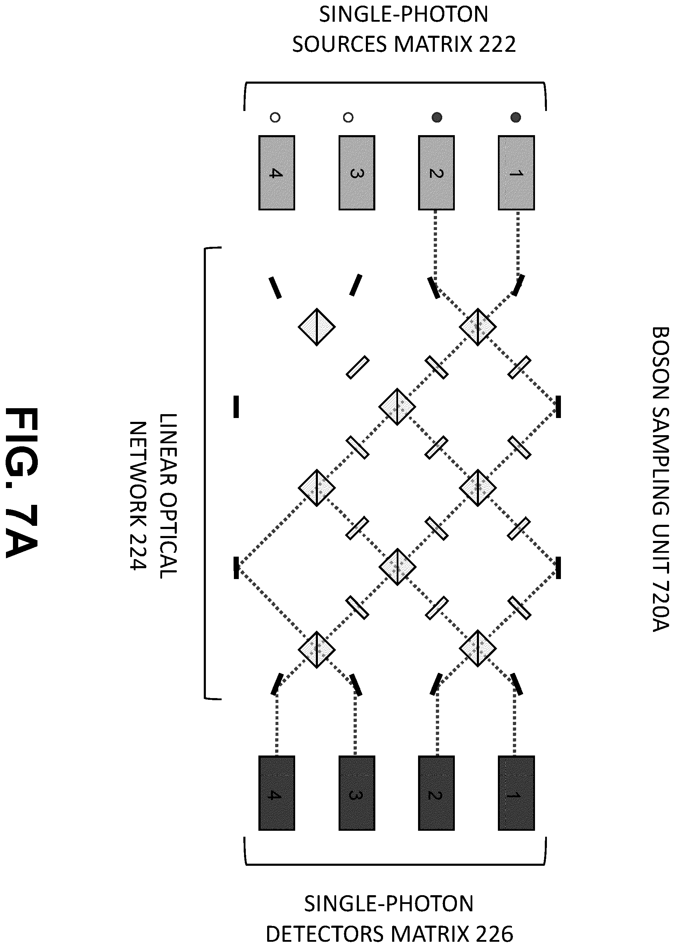

FIG. 2 is a detailed schematic illustration of blockchain miner 115, 117, 119, 121 of FIG. 1. As illustrated, blockchain miner 115, 117, 119, 121 may comprise processing unit 210 and boson sampling unit 220. Boson sampling unit 220 may refer to any kind of hardware device capable of providing samples from a boson sampling distribution. Various hardware implementations are envisaged for boson sampling unit 220 (e.g. see FIGS. 7A-7C).

As shown in FIG. 2 boson sampling unit 220 may comprise, but is not limited to, single-photon sources matrix 222, linear optical network 224, and single photon detectors matrix 226. Linear optical network 224 may relate to any type of optical system having an equal number of input and output ports, referred to as modes (M), and a plurality of different optical paths connecting the input and output modes. Accordingly, linear optical network 224 may be mathematically characterised by an $M \times M$ unitary matrix ($U$), which describes mathematically how the state of an input photon is transformed as it passes through linear optical network 224. In accordance with some embodiments, the unitary matrix $U$ may correspond to a pseudo-Haar random matrix. Single-photon source matrix 222 may be configured to provide a single photon at one or more of the input modes of the linear optical network 224, in other words, the single-photon source matrix 222 may be configured to generate an input (Fock) state of the form:

$$|\Psi_{in}> = |n_1^{in}, \ldots, n_M^{in}> = \prod_{i=1}^{M}(\hat{a}_i^{\dagger})^{n_i^{in}} |0_1, \ldots, 0_M>, \quad \sum_{i=1}^{M} n_i^{in} = N$$

where $n_1^{in}=0$ or 1 is the number of photons in the $i^{th}$ input mode, M is the number of input and output modes, N is the total number of photons in the input state ($N \leq M$) and $\hat{a}_i^{\dagger}$ is the creation operator of the input mode i. In other words, the input state is one of the different possible combinations, i.e., ways to distribute N photons among M input modes.

As the input photons pass through the linear optical network, their state is transformed. Mathematically the input state is modified by the linear optical network 224, described by $U$, which performs a linear transformation of the creation (and annihilation) operators of the input modes.

$$\hat{U}\hat{a}_i^\dagger \hat{U}^\dagger = \sum_{j=1}^{m} U_{i,j}\hat{a}_j^\dagger$$

It follows that the output state vector $|\Psi_{out}>$ of the system is a superposition of all possible output configurations. Each output configuration is related to a different observable output, i.e., how the N photons may be distributed among the M output ports after they have passed through linear optical network 224,

$$|\Psi_{out}> = \sum_{S} \gamma_S |n_1^{out}(S),\dots,n_M^{out}(S)>$$

where S is an output configuration, $n_i^{out}(S) \in [0,N]$ is the number of photons in the i-th output mode associated with configuration S and $\gamma_S$ the probability amplitude associated with configuration S. In the case of a lossless linear optical network 224 $\sum_{i=1}^{M} n_i^{out} = N$, i.e., the total number of photons N is conserved. $\gamma_S$ values are related to matrix permanents:

$$\gamma_S = \frac{Per(U_S)}{\sqrt{n_1^{out}!\dots n_M^{out}(S)!}}$$

where Us is a N x N submatrix of U and Per(Us) its permanent. The probability of measuring output configuration S is given by $|\gamma_S|^2$. To preserve complexity, the unitary matrix U should be free of any structure that might facilitate the calculation of the permanent. Examples of such a structure include a matrix with multiple duplicate rows/columns or a diagonal matrix for which the permanent is simply equal to the product of all diagonal elements. Without loss of generality, computation of the permanent matrix may be a #P-hard problem and a universal quantum computer could not exactly compute a permanent matrix in a more efficient way.

Single-photon detector matrix 226 may be configured to detect the presence of one or more photons at each output mode of the linear optical network 224. Accordingly, the output of the single-photon detector matrix 226 enables detection of a particular output configuration S, its output may take the form of a vector $|n_1^{out}(S),\dots,n_M^{out}(S)>$, which corresponds to a sample from a boson sampling distribution. Without loss of generality, the number of different output state configurations Ns is as follows,

$$N_S = (N + M - 1\ N) = \frac{(N+M-1)!}{N!\,(M-1)!}$$

which is super-exponential in N.

In the example illustrated in FIG. 2, the number of ports M of linear optical system 224 is equal to four, and the input configuration comprises two single photons located in two of the four input modes. As illustrated, the two single photons occupy the first two input ports (represented by a shaded circle) of linear optical network 224. The two remaining ports are in the vacuum state (represented by unshaded circles). This may be mathematically represented as |1,1,0,0 >.

Although FIG. 2 illustrates the number of ports M equal to four, and the number of input photons N equal to two, it is to be appreciated that these quantities are not restrictive, and any plurality of ports M and positive number of input photons N may be selected, provided that (N ≤ M). In other words, the number of ports M must be greater than or equal to the number of input photons.

Any one of the boson sampling experiment parameters, i.e., the number of input photons N, the input state of the system, the number of output/input ports M, the unitary transformation U, or a combination thereof, may be selected as a function of information associated with and/or comprised in candidate block 123 to be added to the blockchain. For example, the input state may be selected as a function of a hash value of the header of candidate block 123. Additionally, the number of input photons N, the input state, the number of output/input ports M, and the unitary transformation U may be determined from information associated with and/or comprised in candidate block 123. In accordance with some embodiments, a mapping convention may be predetermined and shared amongst miners 115, 117, 119, 121, which mapping convention maps information comprised in candidate block 123 to any one of the aforementioned boson sampling experiment parameters.

Alternatively, in accordance with some embodiments, any one of the number of input photons N, the input state of the system, the number of output/input ports M, the unitary transformation U, or a combination thereof may be constant over one or more verification processes in order to simplify practical realization, i.e., a same of parameters may be used to verify one or more distinct candidate blocks 123. In that case, the set of parameters may be communicated before the beginning of the verification process throughout the network.

In the regime where $M\sim N^2$ the probability that two or more photons arrive at the same output port of the linear optical system becomes statistically negligible, thus reducing the number of possible output configurations to:

$$N_S = (M\ N\ ) = \frac{M!}{N!\,(M-N)!}$$

This regime may be referred to as the collision-free regime. In this regime, $n_i^{out}=0$ or 1 and the output of the single-photon detector matrix 226 may take the form of a binary vector $|n_1^{out}(S),\ldots,n_M^{out}(S)>$.

Processing unit 210 may include one or more types of processing device. For example, any one or more of a microprocessor, preprocessor, a central processing unit (CPU), support circuit, digital signal processor, integrated circuit, memory, or any other processing device. Processing unit 210 may be configured to communicate with communication network 105 and any one or more of components 222, 224, 226 of boson sampling unit 220. Communication may include exchanging data with any one of the components, and/or sending one or more instructions to the one or more components. For example, processing unit 210 may instruct at which port of single-photon source matrix 222 photons are to be generated to prepare the input state.

In a situation where optical losses are present in linear optical network 224, any blockchain miner 115, 117, 119, 121 may post-select only those samples for which the total number of measured photons equals N, the number of input photons. Similarly, the efficiency of single-photon detector matrix 226 may not be equal to 100%, in this case, photons although present at the detectors are not detected, and thus post-selection may be required. Assuming that the losses are uniform in the linear optical network 224 and that the efficiency of single-photon detector matrix is uniform, the expected distribution remain unchanged during post-selection. However, blockchain miner 115, 117, 119, 121 sampling rate is reduced.

### III. Quantum Proof-of-work (PoW) consensus scheme

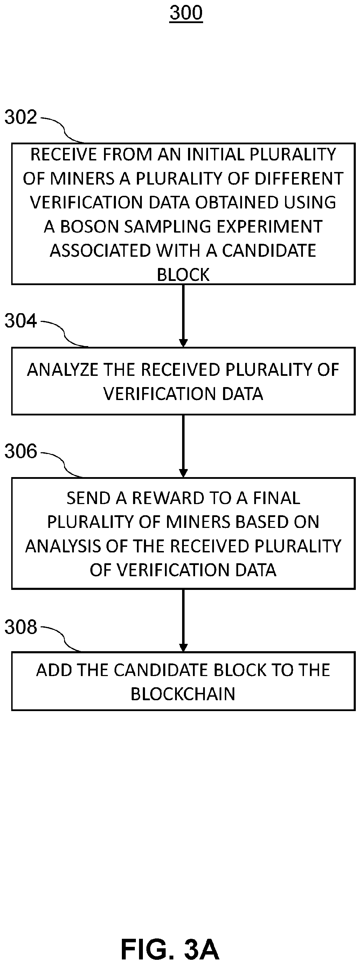

FIG. 3A illustrates a verification process carried out by verifier 125 to verify candidate block 123 using a quantum analogue proof-of-work (PoW) consensus scheme, in accordance with the herein disclosed embodiments. Once candidate block 123 has been transmitted to an initial plurality of miners 115, 117, 119, 121 via communication network 105, the process of verifying candidate block 123 using the quantum PoW consensus scheme may be carried out.

Verifier 125 receives, at step 302, from miners 115, 117, 119, 121, a plurality of different verification data obtained using a boson sampling experiment associated with candidate block 123, wherein each different verification data is associated with a different miner 115, 117, 119, 121 having boson sampling unit 220, configured to generate verification data. Each miner performs the boson sampling experiment using information associated with and/or comprised in the candidate block.

In accordance with some embodiments, the verification data relates to a bit string associated with a set of output configurations measured by boson sampling unit 220. In some embodiments the verification data may further comprise timestamps associated with the time at which each output configuration is measured by boson sampling unit 220.

At step 304, verifier 125 analyses the received plurality of verification data. Analysis of the verification data may commence once a threshold condition is satisfied. The threshold condition may relate to a predetermined number of received verification data. The predetermined number may depend on candidate block 123. For example, the predetermined number of verification data may comprise 100, 200, 500, 1000 or any other predetermined number of verification data. The threshold condition may also refer to a predetermined elapsed period of time. The predetermined period of time may depend on the candidate block, the sampling rate of the miners, i.e., the rate at which the miners can generate and measure an output configuration of a boson sampling experiment, or a statistically determined minimum number of verification data.

Based on the analysis of the received plurality of verification data, verifier 125 sends a reward to at least some of miners 115, 117, 119, 121 that participated in the consensus scheme, at step 306. Finally, at step 308 verifier 125 adds candidate block 123 to the blockchain. In some embodiments, verifier 125 may simultaneously add a record to the blockchain with candidate block 123, attesting that a consensus has been reached. The record may comprise various information. Examples of information may include one or more parameters (e.g., N, M, U, input state) used by each miner to perform the boson sampling experiment, one or more parameters used by the verifier to perform the analysis of the plurality of verification data, one or more results obtained from the analysis of the plurality of verification data, or one or more additional data entries (e.g., the predetermined number of received verification data, the predetermined period of time)

Although verifier 125 and miners 115, 117, 119, 121 have been described as separate entities, any miner may also double as a verifier. Conversely, any verifier may also double as a miner.

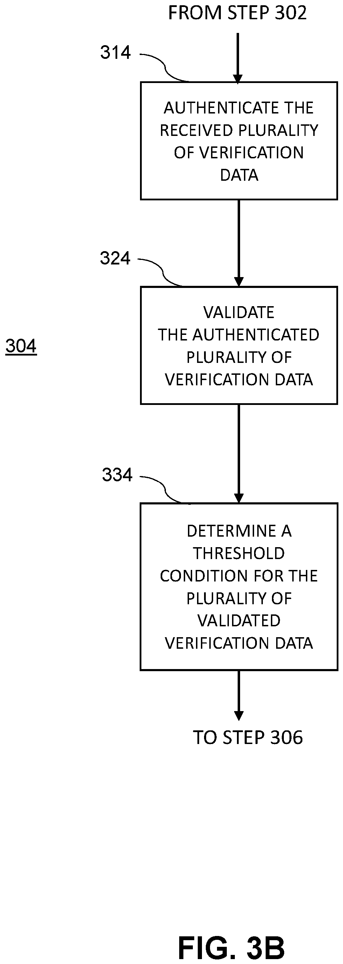

FIG. 3B illustrates the steps comprised in analysing the received plurality of verification data by verifier 125, at step 304 of FIG. 3A. Analysis may comprise authenticating the received plurality of verification data, at step 314, followed by validating the received plurality of verification data, at step 324; and determining, at step 334, if a threshold condition has been met for each one of the plurality of received verification data.

To improve security, in some embodiments, verification data may be encrypted, to prevent fraudulent miners from copying and recycling genuinely generated verification data. For example, verification data may be hashed.

In some embodiments the hash may be calculated using a hash function on the bit string associated with the verification data. In some embodiments, every measured output configuration may be hashed along with its associated timestamp, and optionally any further bit string related to the miner. It is to be appreciated that any output configuration measured by boson sampling unit 220, may be associated with a vector, and therefore a hash of the output configuration relates to a hash of the associated vector.

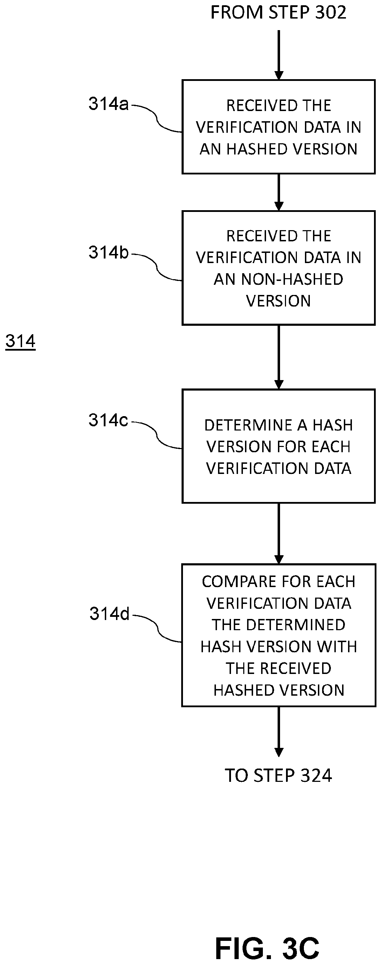

FIG. 3C illustrates further details of how the received plurality of verification data may be authenticated by verifier 125, at step 314 of FIG. 3B in accordance with an embodiment in which a hash of the verification data is received. Verifier 125 receives the plurality of hashed verification data, at step 314a. Subsequently, at step 314b, non-hashed versions of the received hashed verification data is received by verifier 123. In accordance with some embodiments, the non-hashed verification data is received after the plurality of all hashed verification data has been received by verifier 123. Where the hashed verification data has been generated, at least partly in dependence on any other data such as timestamp data, this data is received along with the non-hashed verification data, at step 314b. Verifier 125 may subsequently independently compute a hash of all received non-hashed data, at step 314c. Finally, verifier 125 may compare its determined hash value with the hash value received at 314a, for each received verification data, at step 314d. Miners associated with transmitted hashes that differ from a verifier's determined hashes, are excluded from further participation in the verification process, and consequently excluded from receiving a reward.

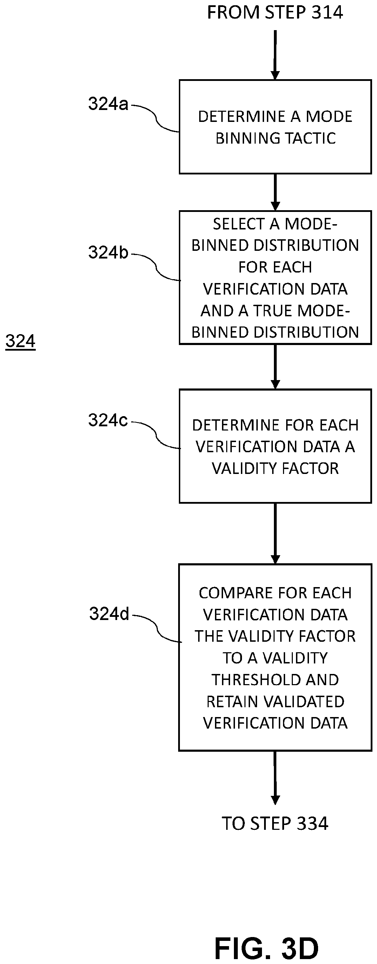

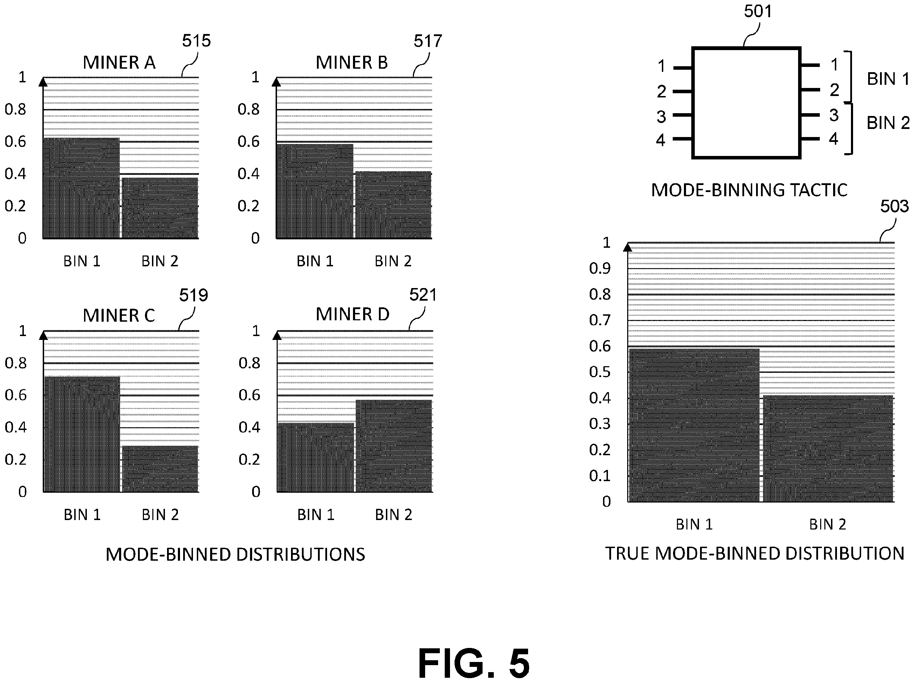

FIG. 3D illustrates how the authenticated plurality of verification data may be validated in step 324 of FIG 3A by verifier 125, in accordance with some embodiments. Verifier 125 may select a mode-binning tactic, at step 324a. Verifier 125 may subsequently determine a mode-binned distribution for each authenticated verification data, and a true mode-binned distribution for the authenticated plurality of verification data, at step 324b. At step 324c, verifier 125 may determine a validity factor for each authenticated verification data. Finally, verifier 125 may compare for each authenticated verification data the determined validity factor with a validity threshold, to validate or invalidate the associated verification data, at step 324d. Miners associated with invalidated verification data are excluded from further participation in the verification process, and consequently excluded from receiving a reward. Further details of the validation of the plurality of authenticated verification data are described below in relation to FIG. 5.

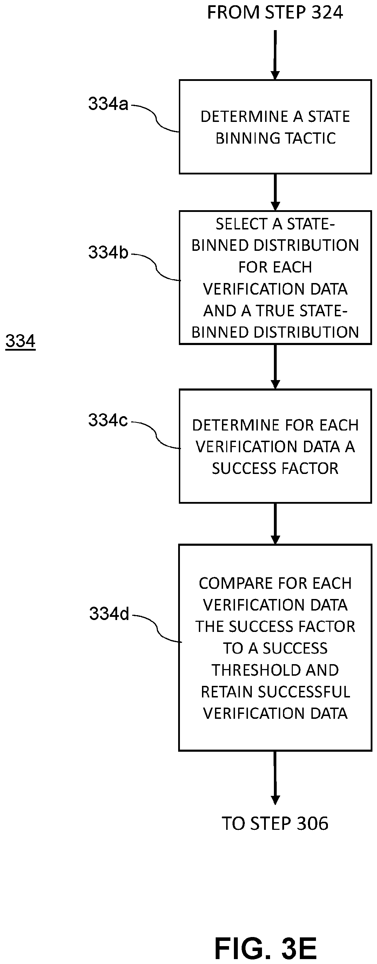

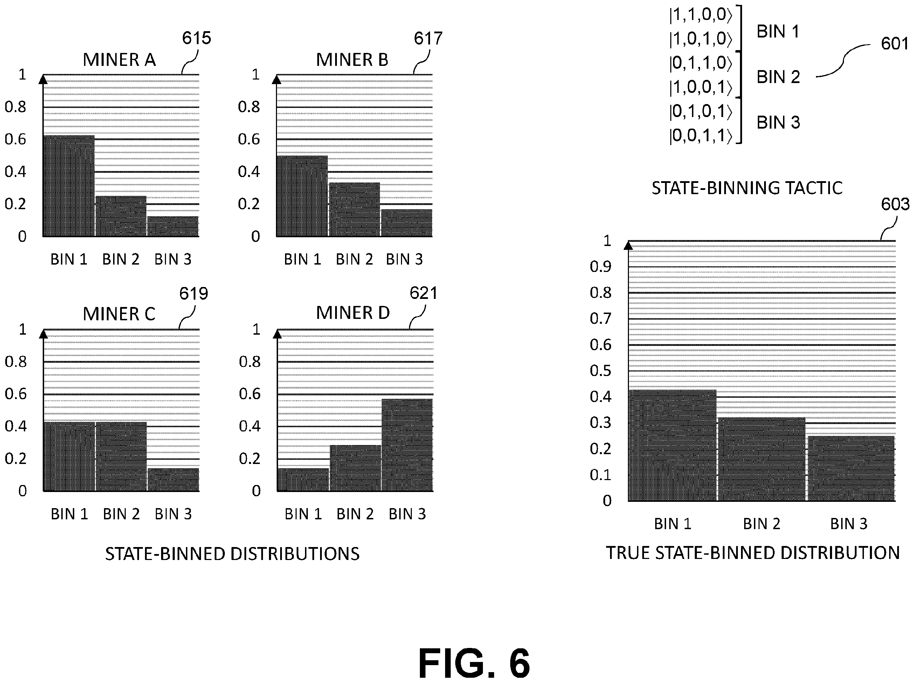

FIG. 3E illustrates how verifier 125 may determine whether verification data generated by miner satisfies a threshold condition, at step 334 of FIG.3B, in accordance with an embodiment. Verifier 125 may determine a state-binning tactic for use, at step 334a. Verifier 125 may subsequently determine a state-binned distribution for each validated verification data, and a true state-binned distribution for the validated plurality of verification data, at step 334b. At step 334c, verifier 125 may determine a success factor for each validated verification data. Finally, at step 334d, verifier 125 may compare for each validated verification data the associated success factor with a success threshold. When the success threshold is not satisfied, the associated miner is excluded from receiving a reward. Details of how the threshold condition is determined in some embodiments, are further described below in relation to FIG. 6.

## IV. Examples of verification data

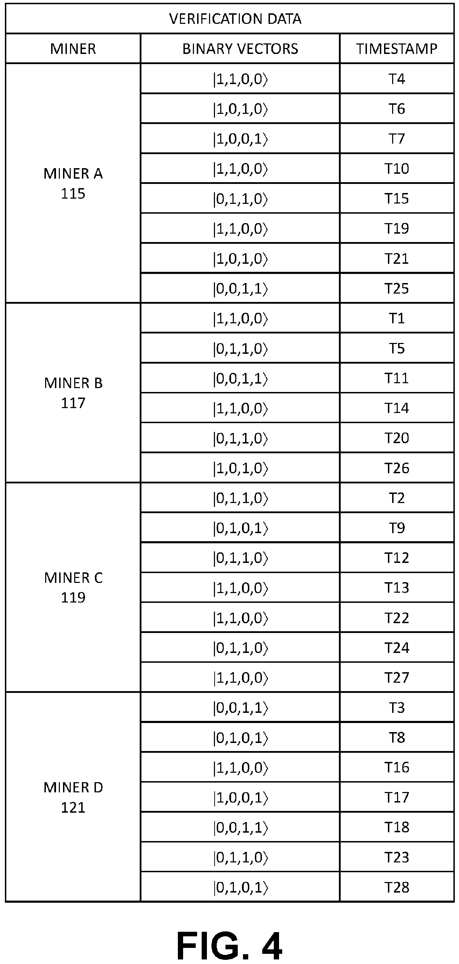

FIG. 4 is a table illustrating an example of a plurality of verification data, received from miners 115, 117, 119, 121, having the input state illustrated in FIG. 2, i.e., $|1,1,0,0>$. As shown here the miners 115, 117, 119, 121 have each measured output configurations of boson sampling unit 220 at specific times. As illustrated, at least some of miners 115, 117, 119, 121 have measured a different number of output configurations, and accordingly sent verification data associated with a different number of binary vectors. A statistical distribution of the binary vectors associated with the received verification data may be determined. These statistics may be performed on the output ports or on the output configurations of linear optical system 224. Additionally, this distribution may be coarse-grained which requires the equal-size grouping or binning of the output statistics of boson sampling unit 220. Coarse-grained statistics may be given according to some given binning tactic (BT), i.e. a particular way of splitting and rearranging into groups (bins) the output configurations. The illustrated verification data is obtained in the collision-free regime ($M \sim N^2$). As with traditional blockchains (e.g., the Bitcoin blockchain), it is assumed that no single miner dominates the network, i.e., owns more than 51% of the measured output configurations.

**V. Validation of the verification data**

Validating the plurality of received verification data may include selecting a mode-binned $P^{(mb)}$ distribution and a true mode-binned distribution. Mode binning may refer to determining a coarse-grained statistic on the output modes (ports) of the linear optical system 224 according to a given mode binning tactic. Any mode-binning tactic may be characterised by one or more mode-binning parameters such as the number of mode bins, the size of the mode bins (i.e. the number of output ports associated with the mode bin), or how the output ports are partitioned to the mode bins (i.e. which output ports are associated with each bin), and may be represented as $\pi^{(mb)}$. In accordance with some embodiments, the number and size of mode bins are transmitted throughout network 105 before the beginning of the verification process. The number and size of mode bins may be constant over one or more verification process, i.e., identical values for these parameters may be used to verify one or more candidate blocks 123. These parameters are intrinsically related to the number of modes M. In some cases, the size of all mode bins is identical, so that the product of the size and the number of mode bins is equal to M.

FIG. 5 illustrates exemplary mode-binned distributions and a true-mode binned distribution performed using the verification data illustrated in FIG. 4. An exemplary mode-binning tactic 501 is illustrated in FIG. 5. In accordance with the illustrated mode-binning tactic 501, the four output ports are divided into two bins, each bin comprising two output ports (bin 1 comprising ports 1 and 2, represented as {1,2}; and bin 2, comprising ports 3 and 4, represented as {3,4}). Mode-binning tactic 501 may be determined as a function of the verification data. For example, mode-binning tactic 501 may be selected as a function of a hash value H of a concatenated version of all authenticated verification data. Alternatively, mode-binning tactic 501 may be determined as a function of a random mode-binning beacon transmitted throughout network 105 after the beginning of the verification process (once each miner has sent its verification data). For example, a mapping function may be used to select mode-binning tactic 501 according to the mode-binning beacon. Mode-binning beacon may be constructed using post-quantum secure verifiable random functions.

Four different mode-binned distributions 515, 517, 519, 521 are illustrated in FIG. 5, corresponding to the verification data of FIG. 4 received from miners 115, 117, 119, 121. The true mode-binned distribution 503 ( $\widehat{P^{(mb)}}$ ) may be estimated by using a polynomial time classical algorithm, knowing the input state, the mode-binning tactic 501 abd the unitary matrix U. Once the true mode-binned distribution has been obtained, a validity factor (V) may be determined for each verification data. If the validity factor is greater than or equal to a validity threshold ($\beta$) then the associated verification data is invalidated, and the associated miner is excluded, as described previously. If the validity factor is less than the validity threshold ($\beta$) then the verification data is validated, and the associated miner may continue participating in the verification process.

An example of a validity factor (Vi) for miner i may take the following form:

$$V_i = \frac{1}{2}\sum_{j=1}^{d}\left|\widehat{P_j^{(mb)}} - P_j^{(mb)}(i)\right|$$

where $P_j^{(mb)}(i)$ is the probability determined for the bin $j$ and miner $i$. Using the numerical results of FIG. 5, and taking $\beta=0.13$, the validity factor $V_D$ for Miner D 121, is 0.134. Accordingly, on this basis Miner D 121 would be excluded, and Miner A 115, Miner B 117, and Miner C 119 would continue participating in the verification process. The above formula corresponding to the total variation distance between the distribution is exemplary. Other statistical metrics such as Kullback-Leibler divergence, Jensen-Shannon divergence or Hellinger distance may be used as alternatives to calculate the validity factor. The value of $\beta$ directly influences the number of samples required to distinguish the true mode-binned distribution 503 from another. Changing the value of this parameter not only adjusts the level of difficulty required to solve the problem but also regulates the block production time. In accordance with some embodiments, the value of $\beta$ may be transmitted throughout network 105 before the beginning of the verification process and may remain constant over one or more verification processes, i.e., an identical value for $\beta$ may be used to verify one or more candidate blocks 123.

Once candidate block 123 has been successfully verified, the number of mode bins d, the mode binning tactic $\pi^{(mb)}$, $\beta$ and the true mode-binned distribution may, in accordance with some embodiment, be included in the record added with candidate block 123 to the blockchain. Miners 115, 117, 119, 121 don't know the selected mode-binning tactic 501 in advance, and there are $M!/(M/d)!^d$ possible mode-binning tactic, meaning that even after the one or more parameters of the boson sampling experiment are specified, there is no advantage in using a classical supercomputers to estimate the true mode-binning distribution ( $\overline{P(mb)}$ ). The probability for a fraudulent miner to generate a random sample set that produces a valid mode-binned distribution within total variation distance β is no more than the probability to correctly guess to within β the probability in each bin (except the last which is given by normalization).This increase the robustness of the consensus mechanism against fraudulent miners. If, under certain circumstances, no miner passes the validation step 324, no consensus can be reached, and the candidate block 123 is rejected.

## VI. Determination of a threshold condition

Determining a threshold condition for a plurality of validated verification data may include selecting a state-binned $P^{(sb)}$ distribution and a true state-binned distribution. State binning may refer to determining a coarse-grained statistic on the output configurations (S) of linear optical network 224, according to the selected state-binning tactic. Any state-binning tactic may be characterised by one or more state-binning parameters such as the number of state bins, the size of the state bins (i.e. the number of output configurations associated with the state bin), or how the output configurations are partitioned to the state bins (i.e. which output configurations are associated with each state bin), and may be represented as $\pi^{(sb)}$. In accordance with some embodiments, the number and size of state bins are transmitted throughout network 105 before the beginning of the verification process. The number and size of state bins may be constant over one or more verification processes, i.e., identical values for these parameters may be used to verify one or more candidate blocks 123. These parameters are intrinsically related to the number of modes M, and the number of input photons N. In some cases, the size of all state bins is identical, so that the product of the size and the number of state bins is equal to M!/N!(M-N)! (in the collision-free regime).

FIG. 6 illustrates exemplary state-binned distributions and a true-state binned distribution performed using the verification data of FIG. 4. For non-limiting illustrative purposes, all the miners are considered validated. An exemplary state-binning tactic 601 is illustrated in FIG. 6. The six output configurations are divided into three bins each comprising two unique output configurations (e.g. bin 1 comprises output configurations $\{|1,1,0,0\rangle,|1,0,1,0\rangle\}$; bin 2 comprises output configurations $\{|0,1,1,0\rangle,|1,0,0,1\rangle\}$; and bin 3 comprises output configurations $\{|0,1,0,1\rangle, |0,0,1,1\rangle\}$). The state-binning tactic 601 may be selected as a function of the validated verification data. For example, state-binning tactic 601 may be selected as a function of a hash value $H_v$ of the concatenated version of all validated verification data. Alternatively, state-binning tactic 601 may be determined as a function of a random state-binning beacon transmitted throughout network 105 after the beginning of the verification process (once each miner has sent its verification data). For example, a mapping function may be used to select state-binning tactic 601 according to the state-binning beacon. State-binning beacon may be constructed using post-quantum secure verifiable random functions.

Four different state-binned distributions 615, 617, 619, 621 are illustrated, corresponding to the verification data illustrated in FIG. 4 received from miners 115, 117, 119, 121. The true state-binned distribution 603 may be estimated by computing an expected value of the state-binned distributions determined for all verification data ($E[P^{(sb)}]$). Once the true state-binned distribution has been obtained, a success factor Su may be determined. If the success factor is less than a success threshold δ then the verification data satisfies the threshold condition, and the associated miner may receive a reward. If the success factor is greater than or equal to the success threshold δ then the verification does not satisfy the threshold condition, and the associated miner is excluded from receiving the reward.

An example of a success factor Sui for a miner i may take the following form:

$$Su_i = |\mu_i - \mu_{net}|$$

where $\mu_i$ represents the peak state-binned probability for miner i and $\mu_{net}$ the net peak state-binned probability. The net peak state-binned probability is the peak probability of the true state-binned distribution.

Referring to the results of FIG. 6, and taking a success threshold δ=0.1, Miner A 115, and Miner D 121 would be excluded from receiving a reward, since the difference of their state bin distributions 615, 621 with respect to the true state-binned distribution 603 is too great (i.e. $Su_i>\delta$). Miner B 117, and Miner C 119 receive the reward. δ may be transmitted throughout network 105 before the beginning of the verification process and may remain constant over one or more verification process, i.e., an identical value for δ may be used to verify one or more candidate blocks 123.

Once candidate block 123 has been successfully verified, the number of state bins d' the state binning tactic $\pi^{(sb)}$, δ and the net peak state-binned probability $\mu_{net}$ may, in accordance with some embodiments, be included to the record added with candidate block 123 to the blockchain.

Unlike mode-binned distributions that can be approximated using a classical (polynomial) algorithm to determine whether a miner is honest or not, state-binned distributions require actual samples obtained from a boson sampler to approximate the peak state-binned probability. Therefore, this additional layer of verification ensures that the samples come from a boson sampling distribution and provides an incentive for miners to use quantum devices to generate the samples. Other incentives to use quantum devices are implemented in the verification process, including the rewarding scheme described later.

## VII. Boson Sampling Unit 220 Hardware embodiments

FIGS. 7A-7C represent different exemplary hardware embodiments of boson sampling unit 220. In the illustrated embodiments, the number of input/output ports (M) for linear optical network 224 is equal to four, and the number of input photons (N) to two.

FIG. 7A is a schematic illustration of a specific boson sampling unit 720A comprising an optical system having bulk optical elements. The three main components described in relation to FIG. 2 may be identified as follows:

- Single-photon sources matrix 222 comprises four single photon sources. These single photon sources may be implemented using various known single photon source technologies, such as spontaneous parametric down-conversion (SPDC) sources, or quantum dot sources. (SPDC) produce pairs of probabilistically correlated photons. Because of the correlation, the detection of exactly one photon in one output implies the presence of a photon in the other, allowing for probabilistic and announced preparation of the single photon state. When extended to multiple such sources, this non-determinism implies an exponential reduction in the rate of simultaneous state preparation from multiple sources. Multiplexing can be used to overcome this scaling problem, when a bank of advertised SPDC sources is operated in parallel and the successful photon preparation events are then multiplexed into the desired boson sampling inputs. On the other hand, quantum dot sources have the ability to produce single photons with high probability on demand. In some embodiments, the input photons are synchronized.

- Single-photon detector matrix 226 comprises four single-photon detectors. Known single-photon detector technologies may be used, such as photon-number resolving detectors or bucket detectors. For the collision-free regime, bucket detectors are sufficient to determine the output configuration of linear optical network 224.

- Linear optical network 224 may comprise bulk optical elements in free space, such as mirrors (black plates), beam splitters (light grey squares) and phase shifters (light grey plates). The broken grey lines represent all the potential optical paths of the input photons.

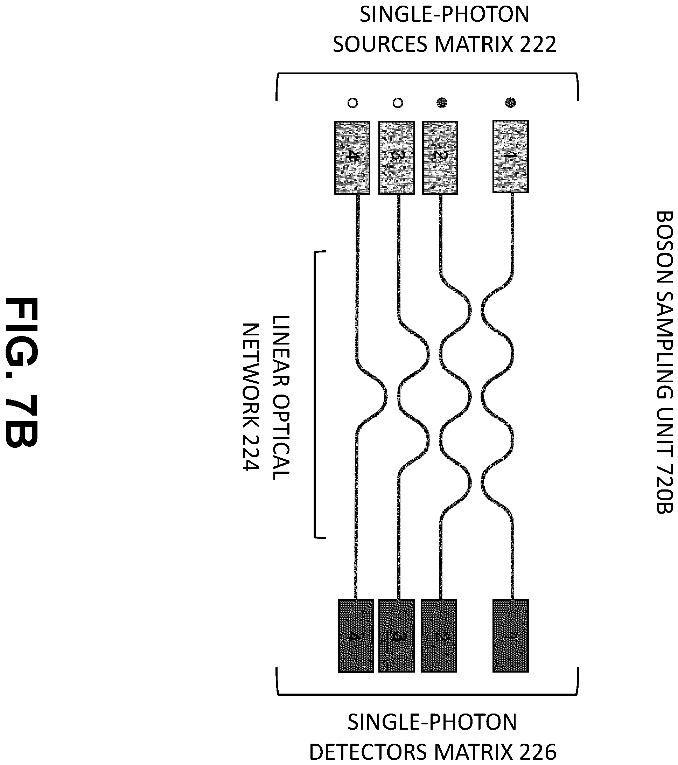

FIG. 7B is a schematic illustration of a boson sampling unit 720B comprising a photonic architecture having integrated waveguides. In this architecture, single-photon source matrix 222 and single-photon detector matrix 226 may be identical to those illustrated in the embodiment of FIG. 7A, described above. The difference between the embodiments of FIG. 7A and 7B resides in the use of integrated structure waveguide circuits and couplers to provide the function of linear optical network 224. Different potential advantages are associated with the embodiment of FIG. 7B such as stability, lower space requirements, and/or ease of fabrication.

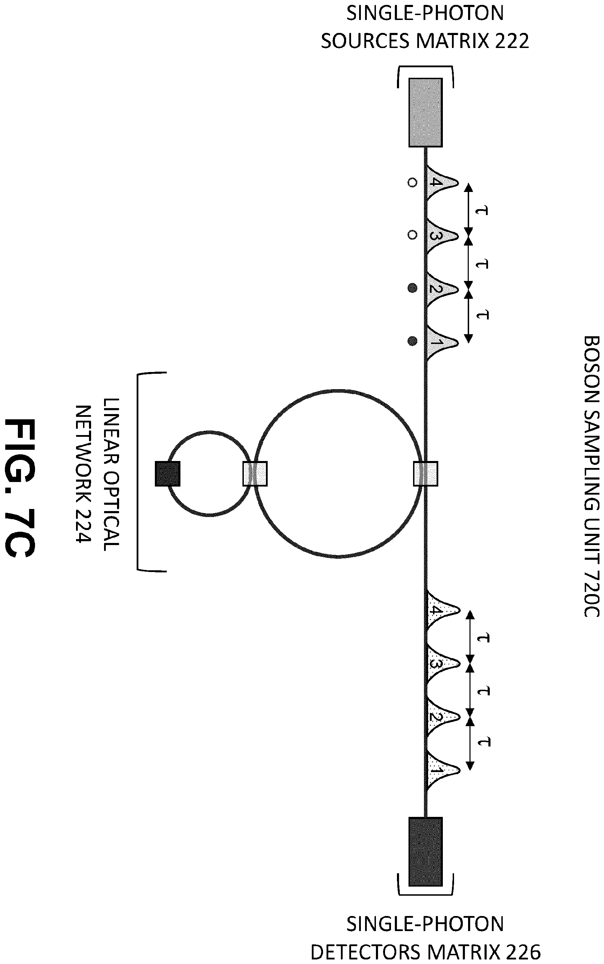

FIG. 7C is a schematic illustration of a boson sampling unit 720C comprising another photonic architecture configured to perform time-bin encoded boson sampling. This embodiment comprises a single-photon source, and a single-photon detector. Instead of being spatially determined, the input/output ports of linear optical network 224 are temporally determined. The single photon source generates a train of pulses temporally separated by $\tau$, which defines time-bin modes, and contains the input state $|\Psi_{in}>$. Each time-bin mode corresponds to a spatial mode in the boson-sampling scheme illustrated in FIG. 2. Linear optical network 224 comprises one or more loops arranged in various configurations, and a bus waveguide. The photon train from the bus waveguide is coupled into the first loop using a switch (light grey square), this loop may accommodate all the interfering M modes, meaning that its length is greater than or equal to $M\tau$. A second switch couples the first loop to the second loop, enabling photons from different time-bins to interact. The second loop may include a phase shifter (black square) Finally, the photons are coupled back to the first loop and the bus waveguide. The single photon detector measures the presence of photons at the different time-bin modes of the output states.

Different hardware implementations are possible. The architectures described previously are provided as non-limiting examples. Use of hybrid coding platforms is also envisaged using jointly the temporal and the polarization degrees of freedom to define the modes. In the coming years, the performance of boson sampling experiments is expected to improve significantly. For example, the single photon source rate, detection efficiency and sampling rate of the boson sampling experiment will increase. As a result, generation of a predetermined number of boson samples will become faster, which will impact block production time. Similar to the Bitcoin blockchain, in which the advent of supercomputers has significantly reduced block production time, several levers can be implemented to regulate the latter. In accordance with some embodiments, the block production time can be regulated by adjusting the number of input photons N, $\beta$ and $\gamma$ values but also the mode and state-bins size.

## VIII. Rewarding scheme

Miners who pass all steps of the verification process (steps 314-334) may receive a reward. The amount of the reward R may depend on one or more parameters. For example, the reward may depend on the number of samples provided in the verification data, in which case a fixed reward per sample may be defined.

One of the goals of the reward system is to prevent fraudulent miners from receiving a reward. In the context of this description, a fraudulent miner may refer to any miner that does not use a boson sampler to generate its verification data, and for which generating the verification data has negligible or no costs. For example, a miner may send samples from a random distribution, artificially inflating the number of committed samples and hoping to receive a large reward by chance. To solve this problem, a penalty term can be imputed on miners who do not complete all steps of the verification process. The amount of the penalty P may depend on one or more parameters. For example, the penalty may depend on the number of samples provided in the verification data, in which case a fixed penalty per sample may be defined. In accordance with some embodiments, the penalty may be selected as a function of the reward. For example, the value of the penalty may be chosen so that the only winning strategy for a miner is to behave honestly. In accordance with some embodiments, the value of the reward R and of the penalty P may be transmitted throughout network 105 before the beginning of the verification process and may remain constant over one or more verification processes, i.e., an identical value for R and P may be used in the verification process one or more candidate blocks 123.

Alternatively, and in accordance with some other embodiments, miners may be invited to stake some tokens to participate in the verification process (sending verification data) and get a chance to receive a reward. In this situation, at the end of the verification process, successful miners reclaim their staked tokens and additionally receive the reward, unsuccessful miners lose the lesser of the penalty or their staked tokens. It should be noted that this mechanism is different from another popular consensus mechanism known in the prior art, namely proof of stake, as here all miners stake the same amount of tokens, and the probability of receiving a reward (mining a block) is independent of the amount staked.

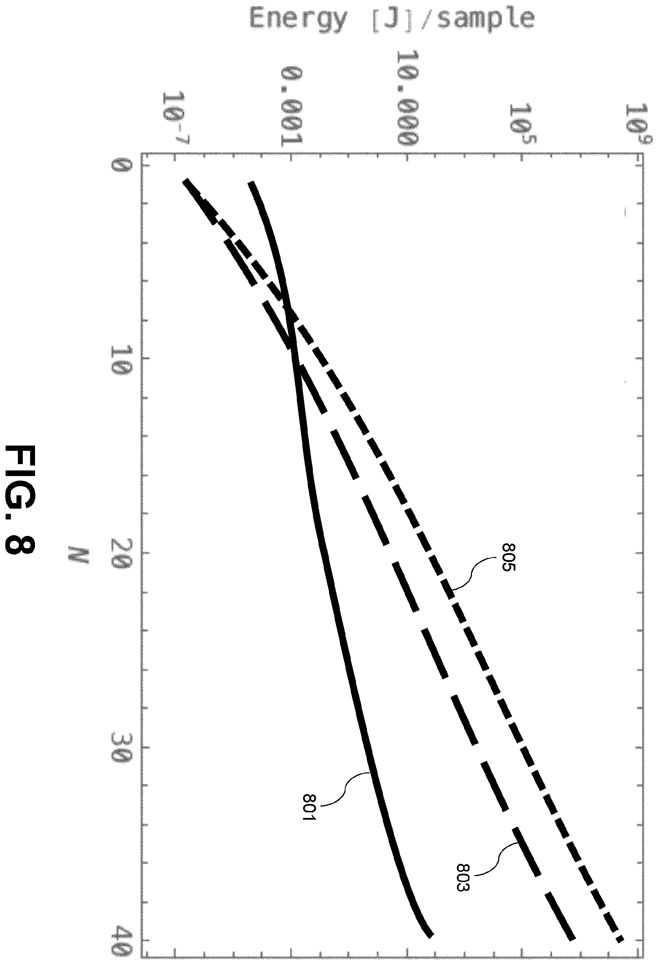

A further purpose of the rewarding system is to ensure that miners use real quantum boson samplers rather than classical computers or supercomputers to solve the boson sampling problem, as this latter option is very energy intensive. For example, in accordance with some embodiments, the reward value may be set so that it is only financially rewarding for a miner to participate in the verification process if a quantum boson sampler is used to provide the verification data. One way to achieve this effect is to analyse the cost of producing a sample using a quantum boson sampler or a supercomputer. In the context of this description, costs refer primarily to energy expenditure, which ultimately is associated with financial costs. In the case of a classical computer, the best boson sampling simulator algorithm has a cost per sample proportional to $2^N N$ (in the collision free regime and for $M = N^2$), whereas for a quantum boson sampler, in the best case the cost is proportional to $N$. Allowing for some intrinsic fixed costs that do not depend on the number of input photons (e.g. the cost of cooling the single-photon detectors matrix 226), there is a wide range of values for the number of input photons N, such that the cost of using a classical boson-sampling simulator greatly exceeds the cost of using a quantum boson sampler. This is illustrated in FIG. 8, showing the energy cost of a quantum boson sampler (plain curve 801), a single core classical computer (large-dashed curve 803) and a supercomputer (small-dashed curve 805). Thus, setting the value of the reward higher than the cost of the quantum boson sampler, but lower than the cost of the classical boson sampling simulator, incentivises the network's miners to use quantum boson samplers.

## IX. Gaussian boson-sampling

Single-photon (Fock state) boson sampling requires reliable sources of indistinguishable photons. This requirement represents one of the challenges to scaling up the complexity of current boson sampling experiments. An alternative to the Fock state boson sampling is the Gaussian boson sampling. The verification process is essentially the same as the one described in relation to FIG. 3A, with some differences described as follows. Whereas Fock state boson sampling is hard to simulate with classical computers due to the complexity of computing permanents, Gaussian boson sampling is hard to simulate due to the hardness of computing Hafnians (#-P complete complexity class). Instead of zero or one photon states at the input, Gaussian boson sampling uses zero photon or squeezed vacuum states. The required input squeezed vacuum states may be prepared deterministically using single- or two-mode squeezers, thereby exhibiting significant improvements in associated sampling rates. The measurements like the Fock state boson sampling are assumed to be number resolving, and like with Fock state boson sampling are post-selected on outcomes with a total number of photons equal to the mean number of photons in the input. Validation step 324 of the verification process is the same except for the classical algorithm used in calculating the mode-binned distribution, which is also polynomial in the problem size but involves calculating a different function.

**EP 4 472 126 A1**

**Claims**

1. A quantum-analogue proof-of-work consensus method for use in a blockchain network, the method comprising:

   receiving a plurality of verification data obtained using a boson sampling experiment associated with a candidate block, from a plurality of different miners of the blockchain network, each verification data being associated with a different miner, and wherein each miner performs the boson sampling experiment using information comprised in the candidate block;
   analysing the received plurality of verification data to determine if a consensus has been achieved; and
   adding the candidate block to a blockchain associated to the blockchain network when consensus is achieved.

2. The method of claim 1, further comprising:
   sending a reward to at least some of the plurality of miners of the blockchain network based on the analysis of the received plurality of verification data.

3. The method of claim 1 or 2, wherein analysing the received plurality of verification data to determine when a consensus is achieved, comprises:

   authenticating the received plurality of verification data;
   validating the authenticated plurality of verification data; and
   determining if a threshold condition for the validated verification data is satisfied.

4. The method of claim 3, wherein validating the authenticated plurality of verification data, comprises:

   selecting a mode-binning tactic **characterised by** one or more mode-binning tactic parameters;
   determining, based on the selected mode-binning tactic for each authenticated verification data associated with each different miner, a mode-binned distribution;
   determining, based on the selected mode-binning tactic for the authenticated plurality of verification data, a true mode-binned distribution;
   determining, for each authenticated verification data, a validity factor, by comparing the mode-binned distribution of the set of authenticated verification data with the true-binned distribution; and
   determining, for each authenticated verification data, if the determined validity factor satisfies a validity threshold, and retaining the sets of authenticated verification data associated with validity factors that satisfy the validity threshold.

5. The method of claim 4, wherein determining the validity factor associated with a set of authenticated verification data comprises determining the statistical distance of the mode-binned distribution of the set of authenticated verification data relative to the true-binned distribution of the plurality of authenticated verification data.

6. The method of any one of claims 3 to 5, wherein determining if a threshold condition for the validated authenticated plurality of verification data is satisfied, comprises:

   selecting a state-binning tactic **characterised by** one or more state-binning tactic parameters;
   determining, based on the selected state-binning tactic for each validated authenticated verification data associated with each different miner, a state-binned distribution;
   determining, based on the selected state-binning tactic for the validated authenticated plurality of verification data, a true state-binned distribution;
   determining, for each validated authenticated verification data, a success factor, by comparing the state-binned distribution of the set of validated authenticated verification data with the true state-binned distribution; and
   determining, for each validated authenticated verification data, if the determined success factor satisfies a success threshold, and retaining the sets of validated authenticated data associated with success factors that satisfy the success threshold.

7. The method of claim 6, wherein each miner associated with retained sets of validated authenticated data receives a reward.

8. The method of any preceding claim, wherein the candidate block is generated by a miner of the blockchain network.

9. The method of any preceding claim, wherein adding the candidate block to a blockchain associated to the blockchain network when consensus is achieved comprises: adding a record confirming that consensus has been achieved to the blockchain.

10. A quantum-analogue proof-of-work consensus method for use in a blockchain network, the method comprising:

receiving a candidate block comprising a plurality of transaction data;
generating verification data by performing a boson sampling experiment using information comprised in the candidate block; and
sending the verification data to a verification server comprised in the blockchain network, the verification data enabling the verification server to determine if consensus is achieved.

11. The method of claim 10, further comprising:
receiving a reward based on an analysis of the sent verification data.

12. The method of claim 10 or 11, wherein the boson sampling experiment is performed using an optical network, the verification data is generated by inputting one or more photons into the optical network and observing an output of the one or more input photons; and using information comprised in the candidate block to perform the boson sampling experiment comprises, determining based on the information comprised in the candidate block, any one or more of: an input configuration of the optical network, a number of input photons, a number of modes, a unitary transform defining an initial configuration of the optical network.

13. The method of any preceding claims, wherein the boson sampling experiment associated with the candidate block is a Fock state boson sampling experiment, or a Gaussian state boson sampling experiment.

14. A verification server comprising at least one processor configured to carry out the method of any one of claims 1 to 9.

15. A blockchain miner comprising at least one processor and one boson sampling unit configured to carry out the method of any one of claims 10 to 13.

FIG. 1

EP 4 472 126 A1

14

EP 4 472 126 A1

**FIG. 2**

300

302 —

RECEIVE FROM AN INITIAL PLURALITY
OF MINERS A PLURALITY OF DIFFERENT
VERIFICATION DATA OBTAINED USING
A BOSON SAMPLING EXPERIMENT
ASSOCIATED WITH A CANDIDATE
BLOCK

304 —

ANALYZE THE RECEIVED PLURALITY OF
VERIFICATION DATA

306 —

SEND A REWARD TO A FINAL
PLURALITY OF MINERS BASED ON
ANALYSIS OF THE RECEIVED PLURALITY
OF VERIFICATION DATA

308 —

ADD THE CANDIDATE BLOCK TO THE
BLOCKCHAIN

# FIG. 3A

FROM STEP 302

314

AUTHENTICATE THE
RECEIVED PLURALITY
OF VERIFICATION
DATA

324

VALIDATE
THE AUTHENTICATED
PLURALITY OF
VERIFICATION DATA

304

334

DETERMINE A
THRESHOLD
CONDITION FOR THE
PLURALITY OF
VALIDATED
VERIFICATION DATA

TO STEP 306

# FIG. 3B

FROM STEP 302

314a — | RECEIVED THE VERIFICATION DATA IN AN HASHED VERSION |

314 (underlined)

314b — | RECEIVED THE VERIFICATION DATA IN AN NON-HASHED VERSION |

314c — | DETERMINE A HASH VERSION FOR EACH VERIFICATION DATA |

314d — | COMPARE FOR EACH VERIFICATION DATA THE DETERMINED HASH VERSION WITH THE RECEIVED HASHED VERSION |

TO STEP 324

# FIG. 3C

FROM STEP 314

324

324a — DETERMINE A MODE BINNING TACTIC

324b — SELECT A MODE-BINNED DISTRIBUTION FOR EACH VERIFICATION DATA AND A TRUE MODE-BINNED DISTRIBUTION

324c — DETERMINE FOR EACH VERIFICATION DATA A VALIDITY FACTOR

324d — COMPARE FOR EACH VERIFICATION DATA THE VALIDITY FACTOR TO A VALIDITY THRESHOLD AND RETAIN VALIDATED VERIFICATION DATA

TO STEP 334

# FIG. 3D

FROM STEP 324

334a — DETERMINE A STATE BINNING TACTIC

334b — SELECT A STATE-BINNED DISTRIBUTION FOR EACH VERIFICATION DATA AND A TRUE STATE-BINNED DISTRIBUTION

__334__

334c — DETERMINE FOR EACH VERIFICATION DATA A SUCCESS FACTOR

334d — COMPARE FOR EACH VERIFICATION DATA THE SUCCESS FACTOR TO A SUCCESS THRESHOLD AND RETAIN SUCCESSFUL VERIFICATION DATA

TO STEP 306

# FIG. 3E

| VERIFICATION DATA | | |
|---|---|---|
| MINER | BINARY VECTORS | TIMESTAMP |
| MINER A 115 | $\lvert 1,1,0,0 \rangle$ | T4 |
| | $\lvert 1,0,1,0 \rangle$ | T6 |
| | $\lvert 1,0,0,1 \rangle$ | T7 |
| | $\lvert 1,1,0,0 \rangle$ | T10 |
| | $\lvert 0,1,1,0 \rangle$ | T15 |
| | $\lvert 1,1,0,0 \rangle$ | T19 |
| | $\lvert 1,0,1,0 \rangle$ | T21 |
| | $\lvert 0,0,1,1 \rangle$ | T25 |
| MINER B 117 | $\lvert 1,1,0,0 \rangle$ | T1 |
| | $\lvert 0,1,1,0 \rangle$ | T5 |
| | $\lvert 0,0,1,1 \rangle$ | T11 |
| | $\lvert 1,1,0,0 \rangle$ | T14 |
| | $\lvert 0,1,1,0 \rangle$ | T20 |
| | $\lvert 1,0,1,0 \rangle$ | T26 |
| MINER C 119 | $\lvert 0,1,1,0 \rangle$ | T2 |
| | $\lvert 0,1,0,1 \rangle$ | T9 |
| | $\lvert 0,1,1,0 \rangle$ | T12 |
| | $\lvert 1,1,0,0 \rangle$ | T13 |
| | $\lvert 1,1,0,0 \rangle$ | T22 |
| | $\lvert 0,1,1,0 \rangle$ | T24 |
| | $\lvert 1,1,0,0 \rangle$ | T27 |
| MINER D 121 | $\lvert 0,0,1,1 \rangle$ | T3 |
| | $\lvert 0,1,0,1 \rangle$ | T8 |
| | $\lvert 1,1,0,0 \rangle$ | T16 |
| | $\lvert 1,0,0,1 \rangle$ | T17 |
| | $\lvert 0,0,1,1 \rangle$ | T18 |
| | $\lvert 0,1,1,0 \rangle$ | T23 |
| | $\lvert 0,1,0,1 \rangle$ | T28 |

# FIG. 4

MINER A                    MINER B

MINER C                    MINER D

MODE-BINNED DISTRIBUTIONS

MODE-BINNING TACTIC

TRUE MODE-BINNED DISTRIBUTION

# FIG. 5

FIG. 6

SINGLE-PHOTON
SOURCES MATRIX 222

FIG. 7A

LINEAR OPTICAL
NETWORK 224

BOSON SAMPLING UNIT 720A

SINGLE-PHOTON
DETECTORS MATRIX 226

# FIG. 7B

SINGLE-PHOTON
SOURCES MATRIX 222

BOSON SAMPLING UNIT 720B

LINEAR OPTICAL
NETWORK 224

SINGLE-PHOTON
DETECTORS MATRIX 226

SINGLE-PHOTON
SOURCES MATRIX 222

SINGLE-PHOTON
DETECTORS MATRIX 226

BOSON SAMPLING UNIT 720C

LINEAR OPTICAL
NETWORK 224

**FIG. 7C**

FIG. 8

| | Europäisches Patentamt European Patent Office Office européen des brevets | **EUROPEAN SEARCH REPORT** | **Application Number** EP 23 17 5874 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ANDRADA-TEODORA CIULEI ET AL: "Preparation for Post-Quantum era: a survey about blockchain schemes from a post-quantum perspective", IACR, INTERNATIONAL ASSOCIATION FOR CRYPTOLOGIC RESEARCH , vol. 20220110:075029 9 January 2022 (2022-01-09), pages 1-38, XP061069974, Retrieved from the Internet: URL:https://eprint.iacr.org/2022/026.pdf [retrieved on 2022-01-09] * the whole document * | 1-15 | INV. H04L9/00 G06N10/00 H04L9/08 H04L9/32 |
| A | US 2020/013027 A1 (ZHU XIAOHAN [US]) 9 January 2020 (2020-01-09) * abstract * * paragraphs [0002] - [0115] * * figures 1A-12 * | 1-15 | |
| T | DEEPESH SINGH ET AL: "Proof-of-work consensus by quantum sampling", ARXIV.ORG, CORNELL UNIVERSITY LIBRARY, 201 OLIN LIBRARY CORNELL UNIVERSITY ITHACA, NY 14853, 31 May 2023 (2023-05-31), XP091524928, * the whole document * | 1-15 | **TECHNICAL FIELDS SEARCHED (IPC)** H04L G06N |

The present search report has been drawn up for all claims

| Place of search | Date of completion of the search | Examiner |
|---|---|---|
| Munich | 7 November 2023 | Mariggis, Athanasios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

  .........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 5874

This annex lists the patent family members relating to the patent documents cited in the above-mentioned European search report.
The members are as contained in the European Patent Office EDP file on
The European Patent Office is in no way liable for these particulars which are merely given for the purpose of information.

07-11-2023

| Patent document cited in search report | Publication date | Patent family member(s) | Publication date |
|---|---|---|---|
| US 2020013027 A1 | 09-01-2020 | NONE | |

EPO FORM P0459

For more details about this annex : see Official Journal of the European Patent Office, No. 12/82